(19) Europäisches Patentamt
European Patent Office
Office européen des brevets

(11) **EP 3 494 402 B1**

(12) **FASCICULE DE BREVET EUROPEEN**

(45) Date de publication et mention
de la délivrance du brevet:
**25.12.2024 Bulletin 2024/52**

(21) Numéro de dépôt: **17743369.5**

(22) Date de dépôt: **01.08.2017**

(51) Classification Internationale des Brevets (IPC):
***G01S 5/02*** *(2010.01)*

(52) Classification Coopérative des Brevets (CPC):
**G01S 5/0289; G01S 5/0244**

(86) Numéro de dépôt international:
**PCT/EP2017/069484**

(87) Numéro de publication internationale:
**WO 2018/024751 (08.02.2018 Gazette 2018/06)**

(54) **SYSTEME ET PROCEDE GLOBAL DE GEOLOCALISATION A PARTIR DE MESURES DE DISTANCES ET DE POSITIONS D'ANCRES IMPRECISES**

SYSTEM UND GLOBALES VERFAHREN ZUR GEOLOKALISIERUNG UNTER VERWENDUNG VON UNGENAUEN DISTANZ- UND ANKERPOSITIONSMESSUNGEN

SYSTEM AND GLOBAL METHOD FOR GEOLOCATION USING IMPRECISE DISTANCE AND ANCHOR POSITION MEASUREMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.08.2016 FR 1601189**

(43) Date de publication de la demande:
**12.06.2019 Bulletin 2019/24**

(73) Titulaire: **THALES**
**92190 Meudon (FR)**

(72) Inventeurs:
• **YWANNE, Frédérique**
**92622 Gennevilliers Cedex (FR)**
• **LEMER, Alain**
**92622 Gennevilliers Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 2 584 849    EP-A2- 1 617 601**

• **CHRISTIAN MENSING ET AL: "Centralized cooperative positioning and tracking with realistic communications constraints", POSITIONING NAVIGATION AND COMMUNICATION (WPNC), 2010 7TH WORKSHOP ON, IEEE, PISCATAWAY, NJ, USA, 11 March 2010 (2010-03-11), pages 215 - 223, XP031813395, ISBN: 978-1-4244-7158-4**

# EP 3 494 402 B1

**Description**

L'invention concerne un procédé global et un système permettant la géolocalisation d'un (ou plusieurs) objet(s) à partir de mesures de distances, obtenues par une fonction de mesure de distances inter-noeuds connue sous le terme anglo-saxon « ranging », et de positions d'ancres imprécises. Le procédé permet ainsi de déterminer la position d'un objet sur une carte, sur un plan, dans un repère donné à l'aide de ses coordonnées géographiques, latitude/longitude ou d'autres coordonnées.

La détermination de la position d'un objet dont on connaît les distances à d'autres objets de positions connues est un sujet classique dans le domaine de la localisation. En général, on utilise des stations de détection dont la position est parfaitement connue ou « ancres ». Dans ce cas, l'incertitude du résultat de la position réside principalement dans la précision des mesures de distances appelées plus loin « ranging ».

Une autre approche possible consiste à déterminer le positionnement relatif des noeuds d'un réseau de stations, sur la seule base d'informations de distances relatives entre tout ou partie de ces noeuds. La connaissance précise d'un nombre limité d'informations a priori de positions sur certains noeuds permet alors de déterminer la position absolue de l'ensemble des noeuds du réseau. Cependant, plusieurs obstacles doivent être surmontés, notamment les suivants:

- L'ensemble des mesures de distances entre les noeuds n'est pas forcément accessible, du fait de la portée des modules de ranging,
- Les mesures de distances sont nécessairement entachées d'erreurs rendant la résolution géométrique potentiellement surdéterminée,
- Les informations nécessaires au positionnement absolu peuvent être distribuées sur les coordonnées de plusieurs noeuds,
- Enfin, les informations nécessaires au positionnement absolu peuvent également être entachées d'erreurs, potentiellement plus importantes que celles associées au ranging.

Ce dernier point est particulièrement important en pratique, notamment en navigation collaborative. En effet, l'information de positionnement absolu de certains noeuds est souvent obtenue par des récepteurs du système de positionnement par satellite connu sous l'abréviation GNSS commerciaux (Global Navigation Satellite System), dont l'erreur de positionnement peut, dans des conditions de réception difficiles, largement excéder les erreurs de mesures de distance (ranging) entre noeuds. Ignorer cette situation peut alors conduire à des erreurs de positionnement des noeuds libres, voire à rejeter des mesures de ranging valides, mais incompatibles des distances calculées à partir des positions absolues supposées sans erreurs.

L'un des problèmes techniques posé est de trouver une solution efficace de calcul des positions de noeuds, afin qu'une métrique des écarts entre les mesures de ranging et les distances entre noeuds de la solution soit minimale et en prenant en compte l'incertitude associée aux erreurs de ranging et aux erreurs de positionnement absolu.

L'art antérieur décrit principalement deux approches pour traiter ce problème.

Une première approche consiste à reconstruire une géométrie relative des noeuds d'un réseau à partir d'informations de ranging et, éventuellement, d'informations angulaires entre noeuds, par exemple par goniométrie au sein d'un noeud. Ces méthodes sont généralement regroupées sous le terme de « localisation sans ancre » ou en anglo-saxon « Anchor Free Localization ». Dans cette approche, qui utilise uniquement les mesures de ranging, toutes les positions des noeuds sont libres, a priori, et les méthodes cherchent à ajuster celles-ci de telle sorte que l'erreur quadratique moyenne entre les distances calculées entre noeuds et les mesures de ranging soit minimale. De très nombreux algorithmes ont été proposés, du simple algorithme de type ressort de masse ou « mass-spring » à des techniques d'optimisation plus complexes, par exemple, la résolution des moindres carrés par Newton-Raphson, le filtrage particulaire, etc. L'essentiel des variantes de cette approche s'attache à éviter la convergence vers un minimum local sans toutefois le garantir.

Une deuxième approche vise à reconstruire la position absolue des noeuds du réseau à partir d'informations de ranging moyennant la connaissance a priori de la position de certains d'entre eux, appelés « ancres ». Il s'agit également de minimiser l'écart quadratique moyen entre la distance entre les positions des noeuds et les mesures de ranging, certaines positions étant a priori fixes et connues. Le problème est alors un problème de minimisation d'une fonction des coordonnées de noeuds libres, par exemple via un algorithme de type plus forte pente ou en anglo-saxon « steepest descent ». L'article « Anchor-Based Three-Dimensional Localization Using Range Measurements », Wang, Vue et al, illustre cette approche qui ne garantit cependant pas l'atteinte d'un optimum global. Des travaux plus théoriques proposent des méthodes d'optimisation globale.

Une troisième approche utilise des sources ou ancres externes de positions inconnues. Le problème est connu sous le terme « autocalibration » où l'on cherche à localiser conjointement des sources et les capteurs qui les détectent. Des différences de temps d'arrivée ou TDOA sont utilisées, ce qui donne une information moins riche qu'une mesure directe de ranging, assimilable à un temps d'arrivée ou TOA (abrégé anglo-saxon de « Time Of Arrival ») et n'exploite pas d'informations a priori sur les positions des sources. L'article « Calibration-Free TDOA Self-Localization », Wendeberg Johannes et al, in Journal of Location Based Services, May 2013, illustre une mise en oeuvre possible de cette approche au travers de plusieurs algorithmes classiques (de type mass-spring, gradient descent, Gauss Newton...) ou plus spécifiques (algorithme de « Cone alignment »), ces algorithmes étant connus de l'homme du métier.

L'un des inconvénients de l'art antérieur est qu'il suppose :

- Soit que toutes les positions des capteurs sont libres, ne délivrant qu'une géométrie de l'ensemble des noeuds potentiellement précise, mais des coordonnées relatives des noeuds entre eux,
- Soit que la détermination de la position absolue des noeuds repose sur la connaissance externe de la position de certains d'entre eux dont l'exactitude est supposée parfaite.

A priori, l'art antérieur (voir l'article << Centralized coopérative positioning and tracking with realistic communications constraints>>, Mensing C, Nielsen JJ, Proceedings of the 2010 7th Workshop on Positioning, Navigation, and Communication (WPNC2010)) ne traite pas de l'intégration conjointe de l'incertitude sur la position des ancres et de la possible remise en cause de ces positions.

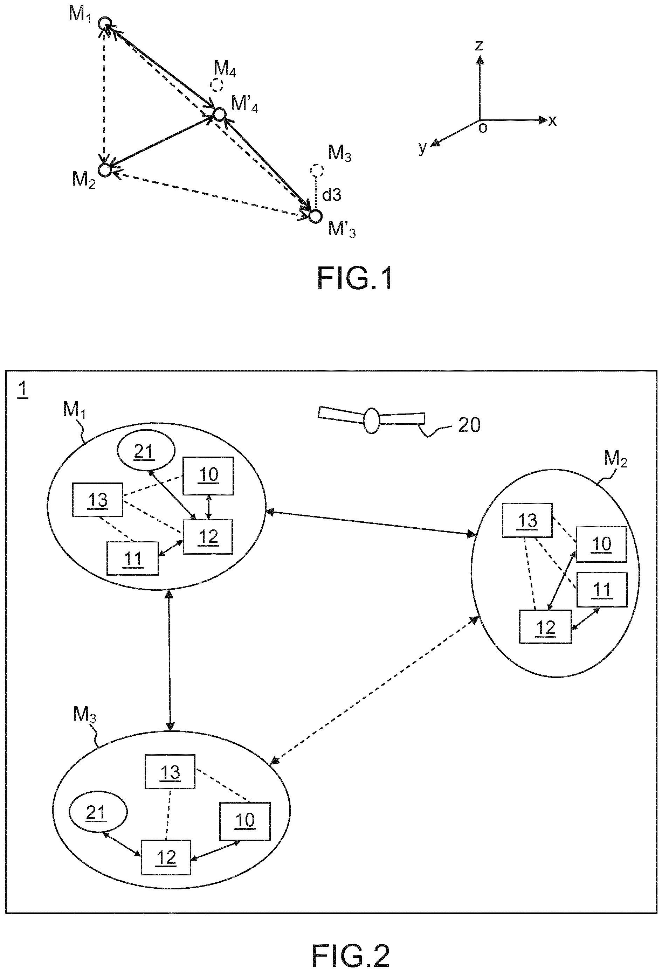

La figure 1 illustre les problèmes non résolus par l'art antérieur. Dans cet exemple, les coordonnées des ancres associées aux noeuds $M_1$ et $M_2$ sont supposées être accessibles de façon idéale, c'est-à-dire sans erreur, par exemple grâce à des relevés topographiques, alors que les coordonnées de l'ancre $M_3$ sont en pratique entachées d'une erreur d3, par exemple mesurée par un système GNSS, positionnant l'ancre $M_3$ au point $M'_3$. Une autre hypothèse de cette illustration est que la précision de ranging est parfaite, en pratique l'erreur est très inférieure à d3. Les mesures de ranging sont représentées par une flèche sur la figure 1. Les techniques de l'art antérieur estiment incorrectement la position du noeud libre en $M'_4$, la position réelle du noeud libre $M_4$ en distribuant les erreurs de ranging associées à ce noeud, ce qui aboutit à un minimum d'erreur quadratique moyenne résiduelle important. En outre, la position du noeud $M_3$ n'est pas remise en cause, et reste erronée.

Le procédé selon l'invention présente une méthode d'estimation des positions des noeuds basée sur une minimisation globale d'un critère, constitué de l'écart quadratique pondéré entre toutes les mesures de distances entre noeuds du réseau et les mesures d'ancrages disponibles à un instant donné, et un modèle de mesures théoriques associées. Le procédé va utiliser un vecteur de mesures hétérogène comprenant à la fois les mesures de ranging entre noeuds (mesures de distances inter-noeuds) et les coordonnées des ancres dont on dispose d'une connaissance imprécise. On introduit donc les coordonnées des ancres comme des mesures supplémentaires de covariance connue, s'ajoutant aux mesures de ranging entre noeuds dans le vecteur d'observations (également appelé « vecteur de mesures »). Les coordonnées des noeuds associés sont parallèlement introduites dans le vecteur d'état à estimer, de sorte qu'elles peuvent être remises en cause par l'algorithme de minimisation. Le procédé consiste alors en une estimation conjointe des coordonnées des noeuds constituant le vecteur d'état par recherche du minimum du critère quadratique global qui tient compte de l'ensemble des observations disponibles (mesures de ranging et mesures d'ancrage) et de leurs incertitudes respectives (matrice de covariance sur les mesures de ranging et sur les coordonnées des ancres).

L'invention concerne un procédé selon les revendications indépendantes 1 et 12. D'autres modes de réalisation sont définis dans les revendications dépendantes.

D'autres caractéristiques et avantages de la présente invention apparaîtront mieux à la lecture de la description qui suit, d'exemples de réalisation, annexée des figures qui représentent :

- Figure 1, une illustration des problèmes de l'art antérieur,
- Figure 2, un schéma d'un réseau de communication,
- Figure 3, un organigramme avec les étapes principales du procédé selon l'invention,
- Figure 4, un exemple d'implémentation du procédé selon l'invention, et
- Figure 5, un exemple de résultat après la mise en oeuvre du procédé selon l'invention.

Afin de mieux faire comprendre le procédé selon l'invention, l'exemple qui suit est donné dans le cas d'un système de communication 1 comprenant plusieurs noeuds $M_i$. Chaque noeud Mi comporte, par exemple, un moyen de communication 10, un processeur 12 adapté à exécuter les étapes du procédé selon l'invention et une batterie 13 ou dispositif d'alimentation. Les noeuds $M_i$ communiquent entre eux, par exemple, par une liaison radiofréquence, sans fil, ou d'autres moyens connus de l'homme du métier.

Le système comporte aussi un dispositif pour déterminer la position absolue de tout ou partie des noeuds. Ainsi, tout ou partie des noeuds peuvent par exemple être équipés d'un récepteur 11 qui, couplé avec un dispositif satellitaire 20, permet au noeud équipé du récepteur 11 de se géo-localiser. Ce dispositif peut être un système de géolocalisation GPS (Global Positioning System), un système GNSS (Global Navigation Satellite System), un moyen de topographie. Sur la figure 2, le noeud $M_2$ est équipé d'un récepteur 11, alors que le noeud $M_3$ ne l'est pas.

Il comporte aussi un dispositif de mesures de distance ou dispositif de ranging 21 colocalisé par exemple sur un noeud Mi ou sur chacun des noeuds du système. Par exemple, le dispositif de mesures de distance peut se présenter sous la forme d'une carte électronique portée par le noeud. Selon une autre variante de réalisation, ce pourrait être une fonctionnalité du système de communication au niveau du noeud mesurant le temps mis par l'onde radio pour transiter entre les noeuds.

$$\overrightarrow{OM_i} = \begin{vmatrix} x_i \\ y_i \\ z_i \end{vmatrix} \qquad \overrightarrow{OM}_i = \begin{vmatrix} x_i \\ y_i \end{vmatrix}$$

Soit un ensemble de N noeuds $M_i$ de positions : en trois dimensions (3D) et en deux dimensions (2D), les coordonnées sont, par exemple, choisies dans un repère cartésien, O étant le point origine choisi dans ce repère.

$$d\left( M_i, M_j \right) = \left\| \overrightarrow{M_i M_j} \right\|$$

La distance entre deux noeuds $M_i$, $M_j$, $d(M_i,M_j)$, est définie par . L'ensemble des positions des N noeuds $M_i$ à un instant donné t, $P_i(t) = \{M_i(t)\}_{i=0..N-1}$ est appelé « géométrie courante ». $r_{ij}$ est une mesure de distance (ranging) obtenue entre le noeud $M_i$ et le noeud $M_j$ par un dispositif de mesure dédié (module de ranging situé par exemple au niveau du noeud) et connue avec une incertitude $\sigma_{rij}$, correspondant à un écart type sur la mesure.

On appellera « ancre » ou « mesure d'ancrage » $A_i^k$ , une information de position absolue sur la $k^{ième}$ coordonnée du noeud $M_i$, obtenue avec une incertitude $\sigma_{Ai}^k$ , correspondant à l'écart type sur cette coordonnée. Cette information peut être obtenue par des moyens divers tels que des relevés topographiques ou des récepteurs GNSS. L'information sur la position d'une ancre varie en fonction de l'instant de mesure. C'est une fonction délivrée par exemple en temps réel par un dispositif GPS. Par souci de simplification d'écriture, le temps n'est pas indiqué. Un noeud disposant d'une mesure de positionnement absolue est dit « noeud ancré ».

Toutes les coordonnées d'une ancre peuvent être connues a priori, ou en partie seulement, par exemple, lorsque la position du noeud est déterminée par examen d'une carte : si le noeud est situé sur une route, on peut savoir que le noeud est à une latitude donnée sans en connaître la longitude.

Le procédé permettant d'estimer la position de noeuds, par exemple, dans un système de communication met en oeuvre une étape au cours de laquelle on va chercher à minimiser un critère global représentatif de l'ensemble des mesures de ranging disponibles entre noeuds ainsi que les coordonnées des ancres, informations de position absolue sur la $k^{ième}$ coordonnée du noeud $M_i$ obtenue avec une incertitude $\sigma_{Ai}^k$ .

On va effectuer une estimation conjointe des coordonnées des noeuds constituant le vecteur d'état par la recherche du minimum du critère quadratique global qui tient compte de l'ensemble des observations disponibles, mesures de ranging et mesures d'ancrage, et de leurs incertitudes respectives traduites par une matrice de covariance sur les mesures de ranging et sur les coordonnées des ancres.

Avant de détailler un exemple d'implémentation, la forme du critère global C(X) à minimiser est donnée. C(X) s'écrit sous la forme générale :

$$C(X) = \left[ \hat{Mes} - Mes(X) \right]^T \Sigma^{-1} \left[ \hat{Mes} - Mes(X) \right]$$

où :

- T désigne la transposée

- X est le vecteur d'état contenant les coordonnées des noeuds dont on cherche à estimer la position, correspondant à tout ou partie des positions $P(t) = \{M_i(t)\}_{i=0..N-1}$. Les coordonnées des noeuds pour lesquelles on dispose d'une ancre imprécise sont introduites dans le vecteur inconnu X à estimer, afin de rendre modifiables les coordonnées dans la recherche de la solution,

- $\hat{Mes} = \begin{pmatrix} R \\ A \end{pmatrix}$ est le vecteur de mesures observées contenant l'ensemble des observations ou mesures disponibles à l'instant t considéré; dans le cas général, il est composé de deux vecteurs $R$ et A , où :

◦ Le vecteur $R$ contient les mesures de ranging $r_{ij}$ disponibles à cet instant t,

◦ Le vecteur $A$ contient les mesures d'ancrage $A_t^k$ disponibles à cet instant t ; ces données sont des coordonnées de certains noeuds dits « ancrés », coordonnées accessibles par la mesure, obtenues par exemple par un capteur GNSS par objet;

-  $$Mes\,(X\,) = \begin{pmatrix} D(X\,) \\ X_A \end{pmatrix}$$ est le vecteur modèle des mesures, qui contient les mesures théoriques associées aux mesures observées $\hat{M}es$ et accessibles par le calcul ; il est donc composé de deux vecteurs :

◦ $D(X)$ est le vecteur des distances théoriques correspondant à R, calculé à partir du vecteur $X$ et, si nécessaire, de connaissances a priori supposées parfaites; les composantes de D(X) correspondent aux distances inter-noeuds, entre deux noeuds, d($M_i$,$M_j$),
◦ $X_A$ est le vecteur contenant les coordonnées théoriques des noeuds pour lesquels on dispose de mesures d'ancrages ; $X_A$ comprend tout ou partie des composantes du vecteur d'état X ;

-  $\Sigma$ est la matrice de covariance globale sur toutes les mesures. Elle comporte donc :

o La matrice de covariance $\Sigma_R$ sur les mesures de ranging qui permet de quantifier l'incertitude sur chaque mesure de ranging ainsi que la corrélation statistique éventuelle des mesures de ranging entre elles. La précision de la mesure de ranging n'est pas forcément identique pour toutes les mesures (usage possible de technologies différentes selon les noeuds), et toute information disponible sur ces précisions est explicitement exploitée,
◦ La matrice de covariance $\Sigma_A$ sur les mesures d'ancrages. Les termes diagonaux de cette matrice sont égaux aux carrés des incertitudes $\sigma_{Ai}^k$ mais il est aussi possible de tenir compte de corrélations entre les erreurs sur les différentes coordonnées : la matrice $\Sigma_A$ n'est pas nécessairement diagonale,
◦ Une matrice $\Sigma_{AR}$ comprenant les termes croisés résultant d'une éventuelle corrélation entre les erreurs sur les mesures de ranging et sur les coordonnées des ancres. En cas de non corrélation, ces termes croisés sont nuls ($\Sigma_{AR}$=0).

La matrice de covariance s'écrit donc sous la forme générale suivante : $$\Sigma = \begin{pmatrix} \Sigma_R & \Sigma_{AR}^T \\ \Sigma_{AR} & \Sigma_A \end{pmatrix}$$ , sachant que les termes de $\Sigma_{AR}$ peuvent être nuls, et T désigne la transposée.

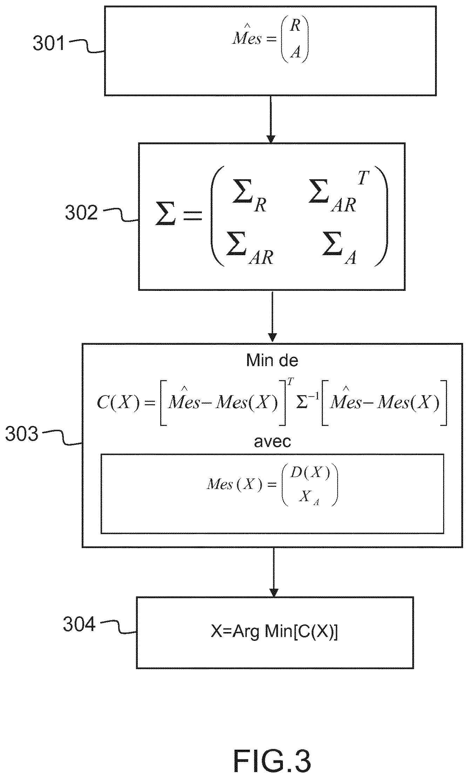

Un exemple détaillé d'implémentation des étapes du procédé selon l'invention est donné ci-après et illustré à la figure 3. Au préalable, on se dote d'un vecteur d'état, d'un vecteur de mesures et de sa matrice de covariance.

•  Vecteur d'état $X$ - le vecteur X contient les coordonnées des noeuds que le procédé va chercher à estimer. Dans le cas le plus général, le vecteur X contient donc les coordonnées des N noeuds du réseau associés aux positions P(t)={$M_i$ $(t)$}$_{i=0..N-1}$.

En 3D, le vecteur X a 3N composantes et s'écrit $X = (x_0,y_0,z_0,x_1,y_1,z_1,...,x_{N-1},y_{N-1},z_{N-1})^T$,
**[0029]** En 2D, le vecteur X a 2N composantes et s'écrit $X = (x_0,y_0,x_1,y_1,...,x_{N-1},y_{N-1})^T$.
En pratique, il peut y avoir des cas particuliers où l'on ne cherche pas à localiser certains noeuds ou à estimer certaines coordonnées. Dans ce cas, le vecteur X peut ne contenir qu'une partie des coordonnées des N noeuds. Cependant, si l'on souhaite que le procédé puisse modifier, dans sa recherche de solutions, les positions des noeuds pour lesquelles on dispose d'informations imprécises (« ancres »), les coordonnées de ces noeuds doivent être introduites dans le vecteur d'état X à estimer.
Pour la mise en oeuvre du procédé :

-  On détermine le vecteur des mesures $\hat{M}es$ , 301, comprenant lui-même deux vecteurs :

o Le vecteur $R$ contenant les mesures de ranging $r_{ij}$ disponibles à l'instant considéré: à noter que le vecteur $R$ peut être surdimensionné en considérant le nombre maximal de mesures de ranging pouvant être disponibles à un instant donné, soit typiquement N(N-1) mesures où N est le nombre maximal de noeuds (et en comptant les mesures bidirectionnelles i-j et j-i, i et j sont les indices de deux noeuds). En fonction des mesures disponibles, on remplira ou non les indices correspondants,

o Le vecteur A contenant les mesures d'ancrage $A_i^k$, c'est-à-dire les coordonnées des noeuds pour lesquels on dispose d'informations a priori, d'incertitude connue (« noeuds ancrés »);

- On construit, 302, la matrice de covariance sur les mesures $\Sigma$, à partir :

o De la matrice de covariance $\Sigma_R$ sur les mesures de ranging ; les termes diagonaux de $\Sigma_R$ sont donnés par les valeurs d'incertitudes $\sigma^2_{rij}$ ; si les mesures de ranging sont décorrélées entre elles, la matrice $\Sigma_R$ sera une matrice purement diagonale,
o De la matrice de covariance $\Sigma_A$ sur les mesures d'ancrages. Les termes diagonaux de cette matrice sont égaux à $\sigma^2_{Ai}$, on peut tenir compte de la corrélation éventuelle entre les erreurs sur les différentes coordonnées : la matrice $\Sigma_A$ n'est pas nécessairement diagonale,
o Une matrice $\Sigma_{AR}$ comprenant les termes croisés résultant d'une éventuelle corrélation entre les erreurs sur les mesures de ranging et les erreurs sur les coordonnées des ancres. En cas de non corrélation, ces termes croisés sont nuls ($\Sigma_{AR}$=0),

avec :

$$\Sigma = \begin{pmatrix} \Sigma_R & \Sigma_{AR}^{\ T} \\ \Sigma_{AR} & \Sigma_A \end{pmatrix}$$

- On minimise, 303, le critère C(X),

$C(X) = [\hat{M}es\text{-} Mes(X)^T\Sigma^{-1}[\hat{M}es\text{-} Mes(X)]$, en calculant $Mes(X) = \begin{pmatrix} D(X) \\ X_A \end{pmatrix}$ vecteur modèle des mesures défini précédemment, et

- On détermine, 304, les coordonnées des objets à la fin de l'étape de minimisation, en prenant le vecteur X solution de la minimisation du critère, X=Arg Min[C(X)], le vecteur X contenant les coordonnées des objets.

Sous l'hypothèse d'erreurs de mesures gaussiennes additives centrées, de matrice de covariance connue $\Sigma$, l'estimateur minimisant le critère $C(X)$ n'est autre que l'estimateur du maximum de vraisemblance de $X$, car minimiser $C(X)$ revient à maximiser la vraisemblance *probabilité*($\hat{M}es|X$). Il est de plus réputé robuste, même en présence de mesures déviant de ce modèle d'erreurs gaussiennes.

Du fait de la non linéarité de Mes(X), la minimisation de $C(X)$ n'est pas immédiate et les algorithmes efficaces minimisant $C(X)$ sont des algorithmes itératifs connus de l'homme du métier.

De nombreux algorithmes de minimisation de critère quadratique existent et peuvent être utilisés pour estimer les positions à partir des mesures de ranging et des mesures d'ancrage (par exemple, algorithme du gradient, algorithme de Newton-Raphson,...).

Une variante de réalisation utilise les algorithmes de Gauss-Newton, qui sont réputés présenter un bon compromis entre coût de calcul, efficacité et robustesse. Ils utilisent un développement limité du critère à l'ordre deux, en négligeant toutefois l'un des deux termes du hessien du critère. L'équation d'itération s'écrit sous la forme générale suivante :

$$X_{k+1} = X_k - \alpha(k)H_k^{-1}J_k$$

où :

- $X_k$ est le vecteur des coordonnées des noeuds estimées à l'itération k,

$$J_k = -2\left[\left(\frac{\partial Mes}{\partial X}\right)^T \Sigma^{-1}\left(\hat{Mes} - Mes(X)\right)\right]_{X=Xk}$$ est le gradient du critère $C(X)$, calculé en $X_k$,

$$H_k = 2\left[\left(\frac{\partial Mes}{\partial X}\right)^T \Sigma^{-1}\left(\frac{\partial Mes}{\partial X}\right)\right]_{X=Xk}$$ est le premier terme du hessien du critère $C(X)$, calculé en $X_k$,

- $\left(\frac{\partial Mes}{\partial X}\right)$ est la matrice jacobienne sur le vecteur de mesures théoriques $Mes(X)$, comprenant le vecteur de mesures théoriques de distance $D(X)$ et le vecteur $X_A$ contenant les coordonnées des noeuds « ancrés » (et comprenant tout ou partie du vecteur d'état X),

- $\alpha(k)$ est un pas d'optimisation, constant ou variable ($\alpha$=1 pour l'algorithme de Gauss-Newton classique mais de nombreuses variantes utilisent des pas adaptatifs visant à accélérer la convergence, ou bien à éviter de rester bloqué dans un minimum local).

Ainsi, l'équation d'itération du procédé pour déterminer le vecteur des coordonnées des noeuds à l'itération k+1 à partir de l'itération k s'exprime par:

$$X_{k+1} = X_k + \alpha(k)\left[\left(\frac{\partial Mes}{\partial X}\right)^T \Sigma^{-1}\left(\frac{\partial Mes}{\partial X}\right)\right]^{-1}\left(\frac{\partial Mes}{\partial X}\right)^T \Sigma^{-1}\left[\hat{Mes} - Mes(X)\right].$$

La nouvelle estimation $X_{k+1}$ résulte de l'application d'une « force de rappel » sur le vecteur d'écart $[\hat{Mes}-Mes(X)]$ entre mesures observées et mesures théoriques qu'il s'agisse de ranging ou d'ancrage.

Dans le cas particulier d'un critère quadratique :

- Une matrice (non carrée et non diagonale dans le cas général) est appliquée au vecteur $[\hat{Mes}-Mes(X)]$, autrement dit, la minimisation se fait globalement et non pas noeud par noeud, ou mesure par mesure. Cette matrice n'est ni constante, ni « libre » (au coefficient alpha près), mais résulte d'un calcul précis impliquant la matrice jacobienne du vecteur de mesures théoriques $Mes(X)$.

En pratique, on peut noter que les mesures de ranging et les mesures de coordonnées d'ancrage sont a priori issues de systèmes de mesures indépendants de sorte que ces mesures respectives sont le plus souvent décorrélées.

Dans ce cas particulier, la matrice de covariance est diagonale par blocs et s'écrit $\Sigma = \begin{pmatrix} \Sigma_R & 0 \\ 0 & \Sigma_A \end{pmatrix}$ ; le critère $C(X)$ est alors constitué de la somme de deux critères : l'un, noté $C_R$, sur les seules mesures de ranging et l'autre, $C_A$, sur les seules mesures d'ancrage, avec :

$$C(X) = C_R + C_A = [R - D(X)]^T \Sigma_R^{-1}[R - D(X)] + [A - X_A]^T \Sigma_A^{-1}[A - X_A].$$

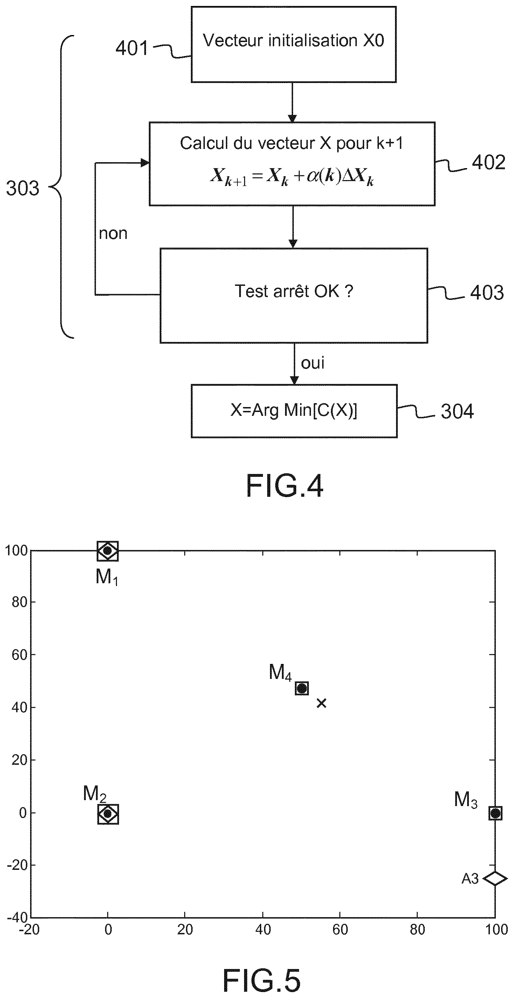

Selon une variante de réalisation, l'estimation du vecteur $X$ minimisant le critère C(X), (303 figure 3) dans sa forme générale, s'obtient de manière itérative en appliquant les étapes illustrées à la figure 4:

Etape d'initialisation, 401 : on dispose en entrée d'un vecteur initial $X_o$ contenant des positions estimées des noeuds qui peut être obtenu de plusieurs façons:

a. En utilisant les positions estimées résultantes d'une application précédente du procédé,

b. En utilisant le résultat d'un algorithme sous-optimal de pré-positionnement, par exemple le procédé décrit dans la demande de brevet du demandeur déposée le même jour et intitulée « procédé et système de géo localisation par calcul direct d'éléments de déplacement » ou bien un algorithme direct sous-optimal sur les mesures de ranging de pseudo-linéarisation PSL,

c. De façon déterministe, par exemple, en exploitant des éléments connus sur les coordonnées de certains noeuds. Typiquement, si des données d'ancrage sont disponibles pour un noeud donné, les coordonnées du vecteur X sont initialisées par les données d'ancrage,

d. De façon aléatoire (tirage au sort) ; pour les noeuds pour lesquels on ne dispose pas de mesures d'ancrage, on peut réaliser un tirage aléatoire dans une zone ou selon une géométrie pré-définie ; pour les noeuds pour lesquels on dispose de données d'ancrage, il est possible d'utiliser un tirage aléatoire centré sur l'ancre et de covariance égale à la covariance sur l'ancre. Cette technique permet d'initialiser le procédé autrement que sur un zéro du critère $C_A$ lié aux ancres, et ainsi d'éviter de rester bloqué sur des minima locaux.

Il est aussi possible de panacher ces approches : par exemple, utiliser les coordonnées d'ancrage pour initialiser les noeuds pour lesquels on dispose de ces coordonnées, et utiliser pour les autres noeuds un algorithme de type PSL exploitant les mesures de ranging (localisation classique sur mesures de TOA).

Etape 402 - on va calculer le vecteur X contenant les coordonnées des points pour une itération k+1 à partir du vecteur obtenu à l'itération précédente k et d'un vecteur de rappel pondéré calculé de sorte à faire décroître le critère :

Calcul de $X_{k+1}$ à partir de $X_k$ : $\boldsymbol{X_{k+1} = X_k + \alpha(k)\Delta X_k}$

$$\left(\frac{\partial Mes}{\partial X}\right) = \left(\begin{array}{c} \dfrac{\partial D}{\partial X} \\ \dfrac{\partial X_A}{\partial X} \end{array}\right),$$

○ Calcul de la matrice jacobienne en $X_k$ :

▪ la sous-matrice $\left(\dfrac{\partial \boldsymbol{D}}{\partial \boldsymbol{X}}\right)$ est obtenue par dérivation des mesures de distances théoriques disponibles : ainsi le terme l,m de $\left(\dfrac{\partial \boldsymbol{D}}{\partial \boldsymbol{X}}\right)$ est obtenu en dérivant la l$^{ième}$ mesure de distance inter-objets par rapport à la m$^{ième}$ composante du vecteur d'état à estimer,

▪ La sous-matrice $\left(\dfrac{\partial X_A}{\partial X}\right)$ relative aux mesures d'ancrages ne comporte que des 0 et des 1.

○ Calcul du vecteur $\Delta X_k$ de « rappel » à appliquer en minimisant :

$$\left[\left(\frac{\partial Mes}{\partial X}\right)\Delta X_k - \Delta Mes_k\right]^T \Sigma^{-1}\left[\left(\frac{\partial Mes}{\partial X}\right)\Delta X_k - \Delta Mes_k\right]$$

avec $\Delta M_k = \hat{Mes} - Mes(Xk)$. Il s'agit là d'un problème de moindres carrés linéaires pondérés, dont la solution explicite a été donnée plus haut :

$$\Delta X_k = \left[\left(\frac{\partial Mes}{\partial X}\right)^T \Sigma^{-1}\left(\frac{\partial Mes}{\partial X}\right)\right]^{-1}\left(\frac{\partial Mes}{\partial X}\right)^T \Sigma^{-1}\Delta Mes_k .$$

Selon une variante de réalisation, le problème est résolu en utilisant une décomposition en valeurs singulières (SVD), dont le détail est bien connu de l'homme de l'art. La résolution par décomposition en SVD présente l'avantage d'être plus stable numériquement et de traiter le cas d'une matrice $\left[\left(\frac{\partial Mes}{\partial X}\right)^T \Sigma^{-1}\left(\frac{\partial Mes}{\partial X}\right)\right]$ singulière, ce qui peut arriver lorsque les mesures de ranging disponibles ou les données d'ancrage ne sont pas suffisamment nombreuses. Dans ce cas, l'algorithme s'adaptera en fixant automatiquement certaines variables du vecteur d'état.

○ Calcul du pas $\alpha(\boldsymbol{k})$ : ce pas peut être :

▪ Fixé une fois pour toutes, ce qui est la solution la moins coûteuse ($\alpha$=1 dans l'algorithme de Gauss-Newton original),

▪ Ajusté à chaque itération, afin de converger au plus vite : plusieurs méthodes publiées de détermination du pas sont possibles comme, par exemple, la méthode de Brent, la méthode de Levenberg-Marquardt, etc. Des méthodes semi-empiriques consistant à partir d'une valeur fixe puis, à diviser par un coefficient P jusqu'à décroissance du critère (ou atteinte d'une valeur minimum), constituent généralement un bon compromis entre coût de calcul et rapidité de convergence.

∘ Actualisation du vecteur estimé : $X_{k+1} = X_k + \alpha(k)\Delta X_k$ ;

Etape 403 - Arrêt du processus itératif qui se poursuit jusqu'à satisfaction de conditions prédéfinies, typiquement :

▪ Critère $C(X)$ non décroissant d'une itération à la suivante, i.e. $C(X_{k+1}) \geq C(X_k)$,
▪ Décroissance relative du critère $C(X)$ inférieure à un seuil prédéfini, i.e., $(C(X_{k+1}) - C(X_k)) \geq seuil *C(X_k)$,
▪ Nombre maximal d'itérations atteint,
▪ Positions estimées n'évoluant plus suffisamment d'une itération à la suivante ($|\Delta X| <$ seuil), etc.

Le vecteur X correspondant au minimum trouvé du critère C(X) à l'arrêt des itérations est considéré comme la solution finale, contenant les coordonnées estimées des noeuds que l'on cherchait à géo-localiser.

Le procédé peut comporter une étape supplémentaire qui contrôle la validité de cette solution finale à partir du vecteur des résidus, par exemple en comparant le critère quadratique résiduel C(X) à un seuil (test des « résidus » classique impliquant un test du chi2), ou bien en regardant si la composante maximale du vecteur des résidus est supérieure à un seuil (norme L[1] du vecteur de résidus connue de l'homme du métier).

Sans sortir du cadre de l'invention, les étapes détaillées ci-avant s'appliquent dans des réseaux de communication où un noeud joue un rôle maître et aussi, dans des réseaux de communication décentralisés, où chacun des noeuds exécute les étapes du procédé.

La figure 5 présente le résultat du procédé appliqué au problème jouet (figure 1) à quatre noeuds $M_1$, $M_2$, $M_3$ et $M_4$, pour lesquels seuls $M_1$, $M_2$, $M_3$ disposent d'information de positionnement a priori (« ancres ») ; sur cette figure les quatre noeuds sont représentés dans un repère cartésien gradué en mètres. Les points $M_1$ et $M_2$ sont ancrés avec une précision élevée (par exemple via un relevé topographique à 10 cm près), le point $M_3$ est ancré mais sa position d'ancrage est incorrectement mesurée avec une erreur de 20 m (par exemple, grâce à un moyen GNSS d'incertitude de 15 m en écart type) et le point $M_4$ n'est pas ancré (pas de moyen local de mesure de position absolue). Tous les noeuds sont ici équipés d'un dispositif de ranging local permettant de mesurer la distance aux autres noeuds, avec une incertitude de 50 cm en écart type. Ces valeurs ne sont qu'illustratives du procédé. Sur cette figure 5 :

• Les ronds pleins sont les positions réelles des noeuds $M_1$, $M_2$, $M_3$, $M_4$,
• Les losanges évidés sont les positions des ancres :

∘ celles des noeuds $M_1$, $M_2$ sont quasiment confondues avec les vraies positions (très peu d'erreur de positionnement, obtenues par exemple par un relevé topographique),
∘ celle de l'ancre $A_3$ correspondant à la position du noeud $M_3$ est décalée vers le bas par rapport à la position réelle du noeud (forte incertitude sur la mesure d'ancrage),

• Les carrés évidés sont les positions estimées par le procédé, à la fin du processus itératif,
• La croix est la position du noeud $M_4$ obtenue par un algorithme classique de localisation de $M_4$ par mesures de ranging sur les noeuds $M_1$, $M_2$, $M_3$ (localisation par TOA, avec un algorithme itératif de Gauss-Newton) sans prendre en compte les incertitudes sur les positions de ces « ancres », supposées parfaitement connues. La position estimée pour le noeud $M_4$ avec cet algorithme classique est logiquement biaisée en raison de l'erreur de positionnement du noeud $M_3$.

On peut constater que la position estimée du noeud $M_4$ à l'issue du procédé est bien située sur la vraie position, de même que les positions estimées des trois autres noeuds, y compris le noeud $M_3$ dont la donnée d'ancrage fournie étant pourtant très erronée. Le procédé selon l'invention, en introduisant et en exploitant la notion d'incertitude sur les coordonnées des ancres, permet de modifier la position de celles-ci pour aboutir, dans ce cas théorique idéal, à une erreur quadratique très faible sur les mesures de ranging. Sur cette simulation, le procédé a convergé en cinq itérations, à partir d'une initialisation réalisée comme suit :

- Pour les noeuds $M_1$, $M_2$, $M_3$, initialisation sur leurs positions d'ancrage (correctes pour $M_1$ et $M_2$, erronée pour $M_3$),
- Pour le noeud $M_4$ pour lequel on ne dispose pas d'information a priori, initialisation automatique par un algorithme sous-optimal direct de type pseudo-linéaire utilisant les mesures de ranging sur les positions d'ancrage des trois autres noeuds.

Le procédé décrit ci-dessus permet le calcul d'une solution pour un jeu de mesures de ranging R donné, et des coordonnées d'ancres données rassemblées dans un vecteur A. Il peut être appliqué de nouveau dès réception d'un nouveau lot de nouvelles mesures de ranging ou de nouvelles coordonnées d'ancres et ce, même si les nouvelles mesures disponibles ne correspondent pas aux mêmes noeuds que ceux utilisés lors de l'instant précédent. En effet, grâce notamment à l'utilisation de la SVD, l'algorithme s'adapte automatiquement à la nature des mesures réellement disponibles à un instant donné.

Dans le cas où les positions de certains noeuds sont parfaitement connues (relevés topographiques précis par exemple) ou que l'on ne souhaite pas les remettre en question en les estimant, il est possible néanmoins de les introduire dans le vecteur d'état et dans le vecteur de mesures comme décrit ci-dessus, en prenant la précaution d'utiliser une valeur de covariance très faible sur les coordonnées de ces ancres dans la matrice $\Sigma_A$. En pratique, cela conduira mécaniquement l'algorithme à ne pas remettre en cause ces coordonnées, puisqu'un léger écart suffira à augmenter drastiquement le sous-critère lié aux mesures d'ancrage ($C_A$ dans le cas non corrélé). Une méthode moins coûteuse, car impliquant des vecteurs et des matrices dont la taille est inférieure à celle utilisée avec la méthode générale, consiste simplement à ne pas introduire ces coordonnées de noeuds parfaitement connues dans le vecteur d'état X à estimer et dans le vecteur de mesures A. Ces données font alors partie des paramètres fixes de l'algorithme intervenant dans la fonction D(X) (vecteur des distances théoriques), comme dans une méthode classique utilisant des ancres de positions supposées parfaitement connues.

En l'absence de toute donnée a priori, même imprécise, sur les positions absolues de l'un quelconque des noeuds du réseau, le vecteur mesures se réduit alors aux seules mesures de ranging et les coordonnées géo-référencées (absolues) des noeuds ne sont pas observables ; seules les positions relatives des noeuds entre eux peuvent être estimées. Le procédé décrit ci-dessus reste néanmoins applicable, l'utilisation de la SVD dans le calcul du déplacement permettant de fournir une solution dont certaines composantes resteront fixées à la valeur d'initialisation. Cependant, dans un tel cas, une alternative, moins coûteuse et permettant de mieux maîtriser les noeuds servant de repère, consiste à réduire le vecteur d'état aux seules composantes observables. Par exemple, en 2D, l'observabilité déterministe du problème est telle que la solution de positionnement à partir de mesures de ranging seules est indéterminée :

> o A une origine ($x_o,y_o$) près (translation),
> o A une rotation près autour de $x_o,y_o$ (symétrie de révolution),
> o A une symétrie axiale près.

Ainsi, pour que le problème d'estimation à partir de mesures de ranging seules puisse être observable, on peut par exemple choisir deux noeuds (0 et 1) comme références du repère local et considérer un vecteur d'état X comportant 2N-3 composantes :

> ▪ Les 2(N-2)=2N-4 coordonnées des (N-2) autres noeuds (tous sauf les noeuds 1 et 2) dont on va estimer les positions (x,y) dans le repère local,
> ▪ L'abscisse x1 (ou l'ordonnée y1) du noeud 1.

Ainsi, le vecteur X à estimer correspondra aux positions des noeuds 1 à N-1 dans un repère ayant pour origine le noeud 0 et d'axe des abscisses (respectivement des ordonnées), l'axe passant par les noeuds 0 et 1 ; il s'écrira sous la forme $X = (x_1,x_2,y_2,x_3,y_3,..x_{N-1},y_{N-1})^T$.

Avec ce choix de vecteur X, le problème devient observable en 2D (si l'on dispose des mesures de ranging ad-hoc), même s'il reste ambigu du fait de la symétrie, ce qui signifie que la solution trouvée par le procédé aura une solution duale, symétrique par rapport à l'axe de référence fixé.

Le procédé selon l'invention s'appuie sur une formalisation rigoureuse de l'optimisation des déplacements vers la solution minimisant l'erreur quadratique pondérée globale, et la solution proposée est optimale au sens du maximum de vraisemblance sous des hypothèses peu contraignantes (erreurs gaussiennes centrées de covariances connues). De plus, le procédé exploite pleinement l'information disponible sur la précision des mesures de ranging, et permet donc l'utilisation de moyens de ranging très hétérogènes au sein d'un même réseau. De même, utilisant des matrices de covariance sur les coordonnées des ancres, le procédé est apte à prendre en compte des incertitudes très disparates ainsi que des corrélations entre les coordonnées des ancres, cas pratique de coordonnées émanant de récepteurs GNSS très différents, ou placés dans des conditions de réception très différentes.

**Revendications**

**1.** - Procédé pour déterminer la position d'un ou plusieurs objets Mi susceptibles de se déplacer dans un réseau, un ou plusieurs objets étant dotés d'une capacité de mesure de distance aux autres objets du réseau, **caractérisé en ce**

**qu'**il comporte au moins les étapes suivantes :

• disposer de coordonnées de points Ai et de l'incertitude sur ces coordonnées décrivant des informations sur la position de tout ou partie des objets à localiser, objets dits ancrés,

• mesurer au moins une distance inter-objets entre au moins un ou plusieurs couples d'objets Mi, Mj, avec une valeur d'incertitude associée à chaque mesure et exécuter les étapes suivantes :

- Calculer un vecteur initial d'un vecteur d'état X contenant les coordonnées des objets dont on cherche à estimer la position correspondant à tout ou partie des positions P(t)=$\{M_i(t)\}_{i=0..N-1}$ à un instant t ;

- Calculer un critère $C(X)$ en utilisant :

■ un vecteur de mesures observées $\hat{M}es$ (301) contenant l'ensemble des observations disponibles à l'instant t considéré, il est composé :

◦ des mesures de distance inter-objets disponibles pour les objets de position à estimer et,
◦ des coordonnées d'objets dits ancrés,

■ une matrice de covariance $\Sigma$ (302) représentant la variation statistique sur le vecteur de mesures, comportant au moins :

◦ une matrice de covariance contenant les incertitudes sur les mesures de distance inter-objets disponibles pour les objets de position à estimer et,
◦ une matrice de covariance contenant les incertitudes sur les coordonnées d'objets dits ancrés,

■ un vecteur modèle des mesures $Mes(X)$ contenant les mesures théoriques associées au vecteur de mesures observées $\hat{M}es$ ,

- Minimiser ce critère $C(X)$ (303) et déterminer les coordonnées de la position d'un ou desdits objets correspondant à ce minimum, (304) X=Arg Min[C(X)].

**2.** - Procédé selon la revendication 1 **caractérisé en ce que** l'on utilise un critère $C(X)$ défini de la manière suivante :

$$C(X) = \left[ \hat{M}es - Mes(X) \right]^{T} \Sigma^{-1} \left[ \hat{M}es - Mes(X) \right]$$

où :

- T désigne la transposée,

- $\hat{M}es = \begin{pmatrix} R \\ A \end{pmatrix}$ (301) est le vecteur de mesures observées composé :

◦ D'un vecteur $R$ contenant les mesures de ranging $r_{ij}$ disponibles à cet instant t,

◦ D'un vecteur $A$ contenant les mesures d'ancrage $A_i^k$ disponibles à cet instant, correspondant à une information de position absolue sur la $k^{\text{ième}}$ coordonnée du noeud $M_i$, obtenue avec une incertitude $\sigma_{Ai}^k$ , correspondant à l'écart type sur cette coordonnée,

- $Mes(X) = \begin{pmatrix} D(X) \\ X_A \end{pmatrix}$ le vecteur modèle des mesures composé de deux vecteurs D(X) et $X_A$ où :

◦ les composantes de D(X) correspondent aux distances inter-noeuds, entre deux noeuds d($M_i,M_j$),
◦ $X_A$ comprend tout ou partie des composantes du vecteur d'état X,

$$\Sigma = \begin{pmatrix} \Sigma_R & \Sigma_{AR}^{\ T} \\ \Sigma_{AR} & \Sigma_A \end{pmatrix}$$

- (302) est la matrice de covariance comportant la matrice de covariance $\Sigma_R$ contenant les incertitudes sur les mesures de ranging et la matrice de covariance $\Sigma_A$ contenant les incertitudes sur les mesures d'ancrages, ainsi que la matrice rectangulaire $\Sigma_{AR}$ contenant les covariances croisées entre ces deux types de mesures.

3. - Procédé selon la revendication 2 **caractérisé en ce que** pour définir la matrice de covariance $\Sigma_A$ on tient compte des incertitudes $\sigma_{Ai}^{k}$ sur chaque coordonnée des ancres et leur corrélation éventuelle, pour définir la matrice de covariance $\Sigma_R$ on tient compte des incertitudes sur chaque mesure de ranging et leur corrélation éventuelle et pour définir la matrice $\Sigma_{AR}$ on tient compte des corrélations éventuelles entre les erreurs sur les mesures de ranging et les erreurs sur les coordonnées des objets ancrés.

4. - Procédé selon l'une des revendications précédentes **caractérisé en ce que** l'on initialise le vecteur d'état X en utilisant au moins une des méthodes suivantes :

   o de façon arbitraire déterministe,
   o de manière aléatoire, par tirage au sort des valeurs des coordonnées des noeuds,
   o en utilisant les positions estimées résultantes d'une application précédente du procédé,
   o en utilisant la solution de méthodes de résolution sous-optimale telles que la pseudo-linéarisation PSL, ou autre algorithme peu coûteux,
   o en exploitant des éléments connus sur les coordonnées de certains noeuds, comme les coordonnées d'ancrage pour les objets « ancrés ».

5. - Procédé selon l'une des revendications précédentes **caractérisé en ce que** l'on obtient des informations de position des ancres par des relevés topographiques ou par un système GNSS en temps réel.

6. - Procédé selon l'une des revendications précédentes **caractérisé en ce que** l'on minimise le critère C(X) par mise en oeuvre d'un algorithme de Gauss-Newton.

7. - Procédé selon l'une des revendications précédentes **caractérisé en ce que** le vecteur X(k+1) pour une itération k+1 est obtenu à partir du vecteur X(k) obtenu à l'itération précédente k en exécutant une méthode de moindres carrés linéaires utilisant une décomposition en valeurs singulières.

8. - Procédé selon l'une des revendications précédentes **caractérisé en ce que** la condition d'arrêt du procédé utilise un des critères suivants :

   • Critère $C(X)$ non décroissant d'une itération à la suivante,
   • Décroissance relative du critère $C(X)$ inférieure à un seuil prédéfini,
   • Nombre maximal d'itérations atteint,
   • Positions estimées n'évoluant plus suffisamment d'un instant à l'autre ($|\Delta X| <$ seuil).

9. - Procédé selon l'une des revendications précédentes **caractérisé en ce qu'**un objet est désigné comme maître et **en ce que** ledit objet est adapté à exécuter les étapes du procédé selon l'une des revendications 1 à 8 et à centraliser les résultats.

10. - Procédé selon l'une des revendications 1 à 8 **caractérisé en ce que** chaque objet du réseau est adapté à exécuter les étapes du procédé selon l'une des revendications 1 à 8.

11. - Procédé selon l'une des revendications précédentes **caractérisé en ce que** l'objet dont la position est recherchée est un noeud dans un système de communication.

12. - Dispositif permettant de déterminer la position d'un ou plusieurs objets Mi susceptibles de se déplacer dans un réseau, un ou plusieurs objets étant dotés d'un dispositif de mesures de distance inter-noeuds (21), les noeuds communiquant entre eux grâce à un moyen de communication (10), **caractérisé en ce qu'**il comporte au moins un processeur (12) adapté à exécuter les étapes du procédé selon l'une des revendications 1 à 11, un dispositif de mesure (11, 20) de la position des noeuds.

**13.** - Dispositif selon la revendication 12 **caractérisé en ce que** les noeuds comportent un module de communication par radiofréquence et le réseau est un système de communication (1).

**Patentansprüche**

**1.** Verfahren zum Bestimmen der Position eines oder mehrerer Objekte Mi, die sich in einem Netz verlagern können, wobei ein oder mehrere Objekte eine Fähigkeit besitzen, eine Distanz zu den anderen Objekten des Netzes zu messen, **dadurch gekennzeichnet, dass** es mindestens die folgenden Schritte aufweist:

• Verfügen über Punktkoordinaten Ai und der Unsicherheit dieser Koordinaten, die Informationen über die Position aller oder eines Teils der zu lokalisierenden Objekte beschreiben, welche Objekte als verankert bezeichnet werden,
• Messen mindestens einer Distanz zwischen Objekten zwischen mindestens einem oder mehreren Paaren von Objekten Mi, Mj, wobei jeder Messung ein Unsicherheitswert zugeordnet ist, und Ausführen der folgenden Schritte:

- Berechnen eines Anfangsvektors eines Zustandsvektors X, der die Koordinaten der Objekte enthält, bei denen die Position geschätzt werden soll, entsprechend allen oder einem Teil der Positionen $P(t) = \{M_i(t)\}_{i=0\ldots N-1}$ zu einem Zeitpunkt t;
- Berechnen eines Kriteriums $C(X)$ unter Verwendung von:

■ einem Vektor der beobachteten Messungen $\hat{Mes}$ (301), der die gesamten Beobachtungen enthält, die zum betreffenden Zeitpunkt t verfügbar sind, er ist zusammengesetzt aus:

o Distanzmessungen zwischen Objekten, die für die Objekte mit zu schätzender Position verfügbar sind, und
o Koordinaten von als verankert bezeichneten Objekten,

■ einer Kovarianzmatrix $\Sigma$ (302), die die statistische Variation an den Messvektoren darstellt, aufweisend mindestens:

o eine Kovarianzmatrix, die die Unsicherheiten der Distanzmessungen zwischen Objekten, die für die Objekte mit zu schätzender Position verfügbar sind, enthält, und
o eine Kovarianzmatrix, die die Unsicherheiten der Koordinaten von als verankert bezeichneten Objekten enthält,

■ einem Modellvektor der Messungen $Mes(X)$, der die theoretischen Messungen enthält, die dem Vektor der beobachteten Messungen $\hat{Mes}$ zugeordnet ist,

- Minimieren dieses Kriteriums C(X) (303) und Bestimmen der Koordinaten der Position eines oder der entsprechenden Objekte entsprechend diesem Minimum, (304) X=Arg Min[C(X)].

**2.** Verfahren nach Anspruch 1, **dadurch gekennzeichnet, dass** ein Kriterium C(X) verwendet wird, das auf folgende Weise definiert ist:

$$C(X) = \left[\hat{Mes} - Mes(X)\right]^T \Sigma^{-1} \left[\hat{Mes} - Mes(X)\right]$$

worin

- T die transponierte Matrix bezeichnet,

$$\hat{Mes} = \begin{pmatrix} R \\ A \end{pmatrix}$$

- (301) der Vektor der beobachteten Messungen ist, der zusammengesetzt ist aus:

  o einem Vektor $R$, der die Entfernungsmessungen $r_{ij}$, die zu diesem Zeitpunkt t verfügbar sind, enthält,

  o einem Vektor $A$, der die Verankerungsmessungen $A_i^k$, die zu diesem Zeitpunkt verfügbar sind, enthält, entsprechend einer absoluten Positionsinformation auf den k-ten Koordinaten des Knotens $M_i$, die mit einer Unsicherheit $\sigma_{Ai}^k$ erhalten wird, entsprechend der Standardabweichung auf dieser Koordinate,

$$Mes(X) = \begin{pmatrix} D(X) \\ X_A \end{pmatrix}$$

- der Modellvektor der Messungen ist, der aus zwei Vektoren D(X) und $X_A$ zusammengesetzt ist, worin:

  o die Komponenten von D(X) den Distanzen zwischen Knoten entsprechen, zwischen zwei Knoten $d(M_i, M_j)$,
  ○ $X_A$ alle oder einen Teil der Komponenten des Zustandsvektors X umfasst,

$$\Sigma = \begin{pmatrix} \Sigma_R & \Sigma_{AR}^T \\ \Sigma_{AR} & \Sigma_A \end{pmatrix}$$

- (302) die Kovarianzmatrix ist, die die Kovarianzmatrix $\Sigma_R$, die die Unsicherheiten der Entfernungsmessungen enthält, und die Kovarianzmatrix $\Sigma_A$, die die Unsicherheiten der Verankerungsmessungen enthält, sowie die rechteckige Matrix $\Sigma_{AR}$ aufweist, die die Kovarianzen enthält, die sich zwischen diesen beiden Messtypen überkreuzen.

3. Verfahren nach Anspruch 2, **dadurch gekennzeichnet, dass** zum Definieren der Kovarianzmatrix $\Sigma_A$ Unsicherheiten $\sigma_{Ai}^k$ bei jeder Koordinate der Anker und ihrer möglichen Korrelation berücksichtigt werden, zum Definieren der Kovarianzmatrix $\Sigma_R$ Unsicherheiten bei jeder Entfernungsmessung und ihrer möglichen Korrelation berücksichtigt werden, und zum Definieren der Matrix $\Sigma_{AR}$ mögliche Korrelationen zwischen den Fehlern bei den Entfernungsmessungen und den Fehlern bei den Koordinaten der verankerten Objekte berücksichtigt werden.

4. Verfahren nach einem der vorhergehenden Ansprüche, **dadurch gekennzeichnet, dass** der Zustandsvektor X unter Verwendung mindestens einer der folgenden Methoden initialisiert wird:

  o willkürlich und deterministisch,
  o zufällig, durch Losentscheid der Werte der Koordinaten der Knoten,
  o unter Verwendung der geschätzten Positionen, die sich aus einer vorhergehenden Anwendung des Verfahrens ergeben,
  o unter Verwendung der Lösung von suboptimalen Auflösungsmethoden, wie der Pseudo-Linearisierung PSL oder eines anderen kostengünstigen Algorithmus,
  o unter Auswertung von bekannten Elementen an den Koordinaten bestimmter Knoten, wie der Verankerungskoordinaten für die "verankerten" Objekte.

5. Verfahren nach einem der vorhergehenden Ansprüche, **dadurch gekennzeichnet, dass** Positionsinformationen der Anker durch topographische Ortsbestimmungen oder durch ein GNSS-System in Echtzeit erhalten werden.

6. Verfahren nach einem der vorhergehenden Ansprüche, **dadurch gekennzeichnet, dass** das Kriterium C(X) durch Ausführen eines Gauss-Newton-Algorithmus minimiert wird.

7. Verfahren nach einem der vorhergehenden Ansprüche, **dadurch gekennzeichnet, dass** der Vektor X(k+1) für eine Iteration k+1 anhand des Vektors X(k) erhalten wird, der bei der vorhergehenden Iteration k erhalten wird unter Ausführung einer Methode der kleinsten linearen Quadrate unter Verwendung einer Zerlegung in singuläre Werte.

8. Verfahren nach einem der vorhergehenden Ansprüche, **dadurch gekennzeichnet, dass** die Haltbedingung des Verfahrens eines der folgenden Kriterien verwendet:

- kein Abnehmen des Kriteriums $C(X)$ von einer Iteration zur nächsten,
- relatives Abnehmen des Kriteriums $C(X)$ unter einen vorbestimmten Schwellenwert,
- das Erreichen der maximalen Anzahl von Iterationen,
- nicht ausreichendes Entwickeln der geschätzten Positionen von einem Zeitpunkt zum anderen ($|\Delta X| <$ Schwellenwert).

9. Verfahren nach einem der vorhergehenden Ansprüche, **dadurch gekennzeichnet, dass** ein Objekt als Master bezeichnet wird und dass das Objekt dazu geeignet ist, die Schritte des Verfahrens nach einem der Ansprüche 1 bis 8 auszuführen und die Ergebnisse zu zentralisieren.

10. Verfahren nach einem der Ansprüche 1 bis 8, **dadurch gekennzeichnet, dass** jedes Objekt des Netzes dazu geeignet ist, die Schritte des Verfahrens nach einem der Ansprüche 1 bis 8 auszuführen.

11. Verfahren nach einem der vorhergehenden Ansprüche, **dadurch gekennzeichnet, dass** das Objekt, dessen Position gesucht wird, ein Knoten in einem Kommunikationssystem ist.

12. Vorrichtung zum Bestimmen der Position eines oder mehrerer Objekte Mi, die sich in einem Netz verlagern können, wobei ein oder mehrere Objekte mit einer Vorrichtung zur Distanzmessung zwischen Knoten (21) ausgerüstet ist, wobei die Knoten untereinander durch ein Kommunikationsmittel (10) kommunizieren, **dadurch gekennzeichnet, dass** sie mindestens einen Prozessor (12), der dazu geeignet ist, die Schritte des Verfahrens nach einem der Ansprüche 1 bis 11 auszuführen, eine Vorrichtung (11, 20) zum Messen der Position der Knoten aufweist.

13. Vorrichtung nach Anspruch 12, **dadurch gekennzeichnet, dass** die Knoten ein Funkfrequenz-Kommunikationsmodul aufweisen und das Netz ein Kommunikationsnetz (1) ist.

**Claims**

1. A method for determining the position of one or more objects Mi capable of moving in a network, one or more objects being provided with an ability to measure a distance to the other objects of the network, **characterised in that** it contains at least the following steps:

- having coordinates of points Ai and the uncertainty as to these coordinates describing information on the position of all or some of the objects to be located, called anchored objects,
- measuring at least one inter-object distance between at least one or more pairs of objects Mi, Mj, with an uncertainty value being associated with each measurement, and executing the following steps:

  - calculating an initial vector of a state vector X containing the coordinates of the objects of which the position is to be estimated, corresponding to all or some of the positions $P(t) = \{M_i(t)\}_{i=0...N-1}$ at a time t;
  - calculating a criterion $C(X)$ using:

    - a vector of observed measurements $\hat{M}es$ (301) containing all of the observations available at the considered time t, it is composed of:

      - inter-object distance measurements available for the objects the position of which is to be estimated, and
      - coordinates of so-called anchored objects,

    - a covariance matrix $\Sigma$ (302) representing the statistical variation on the measurement vector, having at least:

      - a covariance matrix containing the uncertainties on the inter-object distance measurements available for the objects the position of which is to be estimated, and
      - a covariance matrix containing the uncertainties on the coordinates of so-called anchored objects,

    - a model vector of the measurements $Mes(X)$ containing the theoretical measurements associated with the observed measurement vector $\hat{Mes}$,

- minimising this criterion $C(X)$ (303) and determining the coordinates of the position of one or more objects corresponding to this minimum (304) X=Arg Min[C(X)].

2. The method according to claim 1, **characterised in that** a criterion $C(X)$ is used, which is defined as follows:

$$C(X) = \left[ \hat{Mes} - Mes(X) \right]^T \Sigma^{-1} \left[ \hat{Mes} - Mes(X) \right]$$

where:

- T denotes the transpose,

$$\hat{Mes} = \begin{pmatrix} R \\ A \end{pmatrix}$$ (301) is the observed measurement vector, composed of:

　○ a vector $R$ containing the ranging measurements $r_{ij}$ available at this time t,

　○ a vector $A$ containing the anchoring measurements $A_i^k$ available at this time, corresponding to a piece of absolute position information on the $k^{th}$ coordinate of the node $M_i$, obtained with an uncertainty $\sigma_{Ai}^k$, corresponding to the standard deviation of this coordinate;

$$Mes(X) = \begin{pmatrix} D(X) \\ X_A \end{pmatrix}$$ is the model vector of the measurements composed of two vectors D(X) and $X_A$, where:

　○ the components of D(X) correspond to the inter-node distances, between two nodes $d(M_i, M_j)$,
　○ $X_A$ comprises all or some of the components of the state vector X,

$$\Sigma = \begin{pmatrix} \Sigma_R & \Sigma_{AR}^T \\ \Sigma_{AR} & \Sigma_A \end{pmatrix}$$ (302) is the covariance matrix having the covariance matrix $\Sigma_R$ containing the uncertainties as to the ranging measurements and the covariance matrix $\Sigma_A$ containing the uncertainties as to the anchoring measurements, as well as the rectangular matrix $\Sigma_{AR}$ containing the cross-covariances between these two types of measurement.

3. The method according to claim 2, **characterised in that**, to define the covariance matrix $\Sigma_A$, uncertainties $\sigma_{Ai}^k$ as to each coordinate of the anchors and their possible correlation are taken into account, to define the covariance matrix $\Sigma_R$, uncertainties as to each ranging measurement and their possible correlation are taken into account, and to define the matrix $\Sigma_{AR}$, possible correlations between the errors in the ranging measurements and the errors in the coordinates of the anchored objects are taken into account.

4. The method according to one of the preceding claims, **characterised in that** the state vector X is initialised using at least one of the following methods:

　○ arbitrarily deterministic,
　○ randomly, by randomly drawing the values of the coordinates of the nodes,
　○ by using the estimated positions resulting from a previous application of the method,
　○ by using the suboptimal resolution method solution, such as pseudo-linearization PSL, or another inexpensive algorithm,

○ by utilizing known elements on the coordinates of certain nodes, such as the anchoring coordinates for the "anchored" objects.

5. The method according to one of the preceding claims, **characterised in that** position information on the anchors is obtained by topographical surveys or by a GNSS system in real time.

6. The method according to one of the preceding claims, **characterised in that** the criterion C(X) is minimised by implementing a Gauss-Newton algorithm.

7. The method according to one of the preceding claims, **characterised in that** the vector X(k+1) for an iteration k+1 is obtained from the vector X(k) obtained at the previous iteration k by executing a linear least squares method using a singular value decomposition.

8. The method according to one of the preceding claims, **characterised in that** the condition for stopping the method uses one of the following criteria:

- criterion $C(X)$ not decreasing from one iteration to the next,
- relative decrease of the criterion $C(X)$ below a predefined threshold,
- maximum number of iterations reached,
- estimated positions no longer changing sufficiently from one instant to the next ($|\Delta X| <$ threshold).

9. The method according to one of the preceding claims, **characterised in that** an object is designated as master and **in that** said object is adapted to execute the steps of the method according to one of claims 1 to 8 and to centralise the results.

10. The method according to one of claims 1 to 8, **characterised in that** each object of the network is adapted to execute the steps of the method according to one of claims 1 to 8.

11. The method according to one of the preceding claims, **characterised in that** the object whose position is sought is a node in a communication system.

12. A device for determining the position of one or more objects Mi able to move in a network, one or more objects being provided with an inter-node distance measurement device (21), the nodes communicating with one another through a communication means (10), **characterised in that** it has at least one processor (12) adapted to execute the steps of the method according to one of claims 1 to 11, a device (11, 20) for measuring the position of the nodes.

13. The device according to claim 12, **characterised in that** the nodes have a radiofrequency communication module and the network is a communication system (1).

FIG.1

FIG.2

$$\hat{Mes} = \begin{pmatrix} R \\ A \end{pmatrix}$$

301

$$\Sigma = \begin{pmatrix} \Sigma_R & \Sigma_{AR}^{\ T} \\ \Sigma_{AR} & \Sigma_A \end{pmatrix}$$

302

Min de

$$C(X) = \left[\hat{Mes} - Mes(X)\right]^T \Sigma^{-1} \left[\hat{Mes} - Mes(X)\right]$$

avec

$$Mes(X) = \begin{pmatrix} D(X) \\ X_A \end{pmatrix}$$

303

X=Arg Min[C(X)]

304

FIG.3

Vecteur initialisation X0 — 401

Calcul du vecteur X pour k+1
$$X_{k+1} = X_k + \alpha(k)\Delta X_k$$
402

non

Test arrêt OK ? — 403

303

oui

X=Arg Min[C(X)] — 304

## FIG.4

## FIG.5

## RÉFÉRENCES CITÉES DANS LA DESCRIPTION

**Littérature non-brevet citée dans la description**

- **WANG, VUE**. *Anchor-Based Three-Dimensional Localization Using Range Measurements*
- **WENDEBERG JOHANNES et al.** Calibration-Free TDOA Self-Localization. *Journal of Location Based Services*, May 2013
- **MENSING C ; NIELSEN JJ**. Centralized coopérative positioning and tracking with realistic communications constraints. *Proceedings of the 2010 7th Workshop on Positioning, Navigation, and Communication (WPNC2010)*